# EUROPEAN PATENT APPLICATION

(11) **EP 4 397 476 A1**
(43) Date of publication of application: **10.07.2024**
(21) Application number: 24150255.8
(22) Date of filing: 03.01.2024
(51) Int. Cl.: B29C 73/10

(54) **METHOD OF REPAIRING THERMOPLASTIC COMPOSITE COMPONENTS WITH MANUAL ULTRASONIC WELD**

(30) Priority: 03.01.2023 US 202318092881
(71) Applicant: Rohr, Inc., Chula Vista, CA 91910-2098 (US)
(72) Inventor: SHEN, Shyan Bob, San Diego, 92126 (US); van TOOREN, Michael, San Diego, 92122 (US); WOODS, Jeffrey D., Beaumont, 92223 (US); TARDY, Shawn, Menifee, 92584 (US)
(74) Representative: Dehns

(57) **Abstract**

A method for repairing a thermoplastic composite component (20) is provided that includes: preparing at least one repair patch (22) configured to conform with a defect region (26) of the thermoplastic composite component (20), the defect region (26) having a periphery that defines the defect region (26), the at least one repair patch (22) comprising a thermoplastic composite material; providing a thermoplastic interface film (24) configured to conform with at least a part of the at least one repair patch (22), the thermoplastic interface film (24) having a melt temperature; disposing the thermoplastic interface film (24) between a surface of the thermoplastic composite component (20) disposed at the periphery of the defect region (26) and the at least one repair patch (22); and heating the thermoplastic interface film (24) to its melt temperature using an ultrasonic welder (28), and subsequently allowing the thermoplastic interface film (24) to cool, thereby welding the at least one repair patch (22) to the thermoplastic composite component (20).

## Description

### BACKGROUND OF THE INVENTION

### 1. Technical Field

The present disclosure relates to methods for repairing thermoplastic composite components in general, and to methods for repairing thermoplastic composite components using manually ultrasonic techniques in particular.

### 2. Background Information

Components made from thermoplastic composite materials are increasingly in demand in the aircraft and other industries as a result of the wide-ranging advantages of the materials. Thermoplastic composite materials can be used to form lightweight and high-strength structures having complex shapes. In addition, thermoplastic composite materials, as compared to thermoset materials, offer extended shelf life, the ability to be recycled/reformed, improved damage tolerance properties, as well as moisture and chemical resistance.

Widespread adoption of thermoplastic composite materials in some industries, such as the aircraft industry, has been limited as a result of challenges with thermoplastic composite component repairs. For example, some existing repairs utilize pressure and or heat applied from one side or both sides of the component to be repaired. Very often component geometry will not permit the application of pressure and/or heat applied from one side or both sides. In addition, some current methods of repairing thermoplastic composite components use a repair system that cannot practically be used in the field. If an aircraft incurs damage to a thermoplastic composite component and repair of that component is required to make the aircraft airworthy, a repair process that is only available in a repair facility may make such a repair undesirably time consuming and expensive.

What is needed is a repair process that can easily be used in a variety of environments, including the ability of making repairs in the field, and one that can be used to make a temporary repair in the field that makes the aircraft airworthy or one that can make a permanent repair in the field.

### SUMMARY OF THE INVENTION

According to an aspect of the present disclosure, a method for repairing a thermoplastic composite component is provided that includes: preparing at least one repair patch configured to conform with a defect region of the thermoplastic composite component, the defect region having a periphery that defines the defect region, the at least one repair patch comprising a thermoplastic composite material; preparing a thermoplastic interface film configured to conform with at least a part of the at least one repair patch, the thermoplastic interface film having a melt temperature; disposing the thermoplastic interface film between a surface of the thermoplastic composite component disposed at the periphery of the defect region and the at least one repair patch; and heating the thermoplastic interface film to its melt temperature using an ultrasonic welder, and subsequently allowing the thermoplastic interface film to cool, thereby bonding the at least one repair patch to the thermoplastic composite component.

In any of the aspects or embodiments described above and herein, the heating may be a manual process.

In any of the aspects or embodiments described above and herein, the step of heating the thermoplastic interface film to its melt temperature using the ultrasonic welder may include applying a force to an area of the repair patch to be welded thereby holding the repair patch against the thermoplastic interface film.

In any of the aspects or embodiments described above and herein, the method may include maintaining the force while the thermoplastic interface film is allowed to cool below the melt temperature of the thermoplastic interface film.

In any of the aspects or embodiments described above and herein, the heating may include manually manipulating the ultrasonic welder relative to the periphery of the defect region.

In any of the aspects or embodiments described above and herein, the manual manipulation may include producing a plurality of spot welds.

In any of the aspects or embodiments described above and herein, the manual manipulation may include traversing the ultrasonic welder to produce a continuous weld line.

In any of the aspects or embodiments described above and herein, the at least one repair patch may be a plurality of repair patches that collectively conform with the defect region of the thermoplastic composite component.

In any of the aspects or embodiments described above and herein, the thermoplastic composite component and the at least one repair patch may comprise the same material.

In any of the aspects or embodiments described above and herein, the thermoplastic composite component may comprise a first thermoplastic composite material and the at least one repair patch may comprise a second thermoplastic composite material different from the first thermoplastic composite material.

In any of the aspects or embodiments described above and herein, the thermoplastic interface film melt temperature may be equal to or less than a melt temperature of the thermoplastic composite component.

In any of the aspects or embodiments described above and herein, the thermoplastic interface film melt temperature may be equal to or less than a melt temperature of the at least one repair patch.

In any of the aspects or embodiments described above and herein, the defect region may include a hole and the method may include modifying the hole to a predetermined geometry, and the repair patch may be prepared to conform with the predetermined geometry.

In any of the aspects or embodiments described above and herein, the thermoplastic composite component may comprise at least one of glass fibers, carbon fibers, aramid fibers, basalt fibers, mineral fibers, fibers from renewable raw mate rials, metal fibers or polymer fibers.

In any of the aspects or embodiments described above and herein, the thermoplastic composite, or the repair patch, or the thermoplastic interface film, or any combination thereof may comprise a thermoplastic material comprising at least one of polyamide (PA), polyamide-imide (PAI), polyarylsulfone (PAS), polyethersulfone (PES), polyoxymethylene (POM), polyphenylene sulphide (PPS), polyether ether ketone (PEEK), polyetherimide (PEI), polyethylene terephthalate (PET), polyphthalamide (PPA), poly ether ketone ketone (PEKK), or poly aryl ether ketone (PAEK).

According to an aspect of the present disclosure, a method for repairing a thermoplastic composite component is provided that includes: providing a repair patch configured to cover a defect region of a thermoplastic composite component and at least a portion of a surface of the thermoplastic composite component peripheral to the defect region, the at least one repair patch comprising a thermoplastic composite material; providing a thermoplastic interface film configured to conform with at least a part of the repair patch, the thermoplastic interface film having a melt temperature; disposing the thermoplastic interface film between the surface of the thermoplastic composite component peripheral to the defect region and the repair patch; and heating the thermoplastic interface film to its melt temperature using an ultrasonic welder, and subsequently holding the welded area until the thermoplastic interface film cools below its melt temperature.

In any of the aspects or embodiments described above and herein, the heating may include applying a force to an area of the repair patch to be welded thereby holding the repair patch against the thermoplastic interface film, and the force may be maintained while the welded area is held until the thermoplastic interface film is cooled below its the melt temperature.

In any of the aspects or embodiments described above and herein, the heating may include manually manipulating the ultrasonic welder relative to the surface portion of the thermoplastic composite component peripheral to the defect region.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic view of a preparation step of the present disclosure method.
FIG. 2 is a diagrammatic view of a present disclosure method embodiment.
FIG. 2A is a diagrammatic view of the embodiment shown in FIG. 2.
FIG. 2B is a diagrammatic top view of the embodiment shown in FIG. 2A.
FIG. 3 is a diagrammatic view of a present disclosure method embodiment.
FIG. 3A is a diagrammatic view of the embodiment shown in FIG. 3.
FIG. 3B is a diagrammatic view of the embodiment shown in FIG. 3A.
FIG. 3C is a diagrammatic view of the embodiment shown in FIG. 3B.
FIG. 3D is a diagrammatic top view of the embodiment shown in FIG. 3C.
FIG. 4 is a diagrammatic view of a present disclosure method embodiment.
FIG. 4A is a diagrammatic view of the embodiment shown in FIG. 4.
FIG. 4B is a diagrammatic top view of the embodiment shown in FIG. 4A.
FIG. 5 is a diagrammatic view of a present disclosure method embodiment.
FIG. 5A is a diagrammatic view of the embodiment shown in FIG. 5.
FIG. 5B is a diagrammatic top view of the embodiment shown in FIG. 5A.

### DETAILED DESCRIPTION

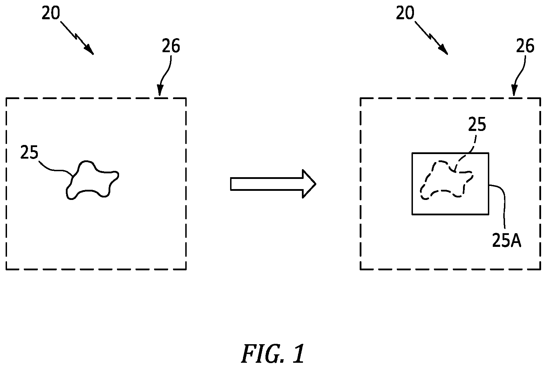

Referring to FIGS. 1-5B, components made from thermoplastic composite materials are utilized in a variety of different applications, including but not limited to aircraft applications such as nacelle components, fuselage components, wing components, control surface components, interior cabin components, and the like. As may be expected, from time to time these thermoplastic composite components will be damaged and will require repair; e.g., for an aircraft to be airworthy. Aspects of the present disclosure include a new, unobvious method for repairing such thermoplastic composite components. The present disclosure is not limited to repairing thermoplastic composite components used in aircraft or to repairing such components in the field, but the present disclosure does provide significant utility in these applications. The present disclosure method for repairing a thermoplastic composite component can be used to repair a new thermoplastic composite component or a used thermoplastic composite component. A new thermoplastic component, for example, may be formed with a defect (e.g., a region including an undesirable void, or a crack, or a pit, or excess porosity, or delamination, or the like, or any combination thereof). A used thermoplastic composite component, on the other hand, may have an area that is worn or eroded over time, delaminated, or mechanically, thermally, and/or chemically deformed or altered during use, or the like, or any combination thereof. To facilitate the description herein, the term "defect" will be used herein to mean any volumetric region or surface area of a thermoplastic component that a user wishes to repair for any reason (e.g., for functional reasons, for cosmetic reasons, or the like). The thermoplastic composite component defect region 26 may assume a variety of different configurations.

As will be detailed herein, the present disclosure method for repairing thermoplastic composite components 20 utilizes at least one repair patch 22 and a thermoplastic interface film 24. During the repair process, the thermoplastic interface film 24 is disposed at an interface between the repair patch 22 and the component to be repaired. In some instances, a defect region 26 may be repaired without removing material from the defect region 26. In other instances, a defect region 26 may benefit from some or all of the defect region 26 being removed or being modified by removing material.

The present disclosure repair method may or may not include a defect region 26 preparation step. In some instances, a defect region 26 of a thermoplastic component may not require any preparation prior to accepting a repair patch 22. For example, if the defect is a void (e.g., a pit, a crack, a gouge, an indentation, etc.) exposed on a surface of the thermoplastic composite component 20 and the configuration of the void lends itself to being filled and/or covered by a repair patch 22, no defect preparation may be needed. In other instances, the defect region 26 of the thermoplastic composite component 20 may benefit from some amount of preparation prior to accepting a repair patch 22. For example, the defect region 26 of the thermoplastic composite component 20 (e.g., a void) and/or its peripheral surfaces 30 may benefit from being modified (e.g., a void modified to a square shape, or a circle shape, or other predetermined shape, or the like). As another example, a defect region 26 of a thermoplastic composite component 20 that is compromised (e.g., excessive porosity, delamination, or the like) may benefit from removal of the compromised material; e.g., the removal may create a desired hole shape such as a square, a circle, or the like that facilitates the repair. In some instances, the repair preparation process may include altering the surface properties of the defect region 26 and/or the peripheral surfaces 30 (e.g., smooth a rough surface or roughen a smooth surface) to facilitate the repair process. In some instances, the repair preparation process may include a cleaning process that cleans the defect region 26 and/or its peripheral surfaces 30 of debris and/or contaminants that may negatively affect the repair process. The present disclosure is not limited to any preparation process for the repair process, and in some instances may not include any preparation step. In some instances, the preparation process may include a plurality of steps; e.g., an initial cleaning, a material removal process, a surface preparation process, a final cleaning, etc. The above repair preparation process examples are provided as illustrative examples and the present disclosure is not limited to these particular preparation processes.

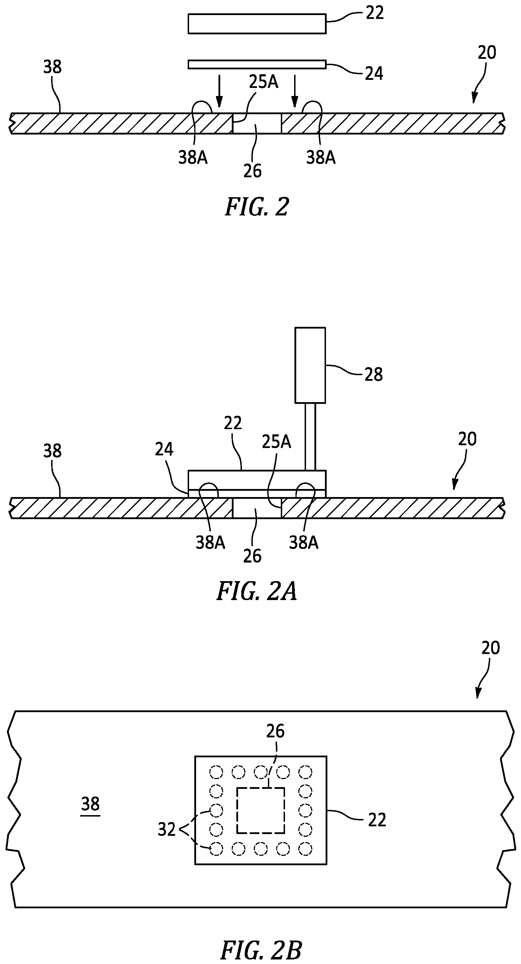

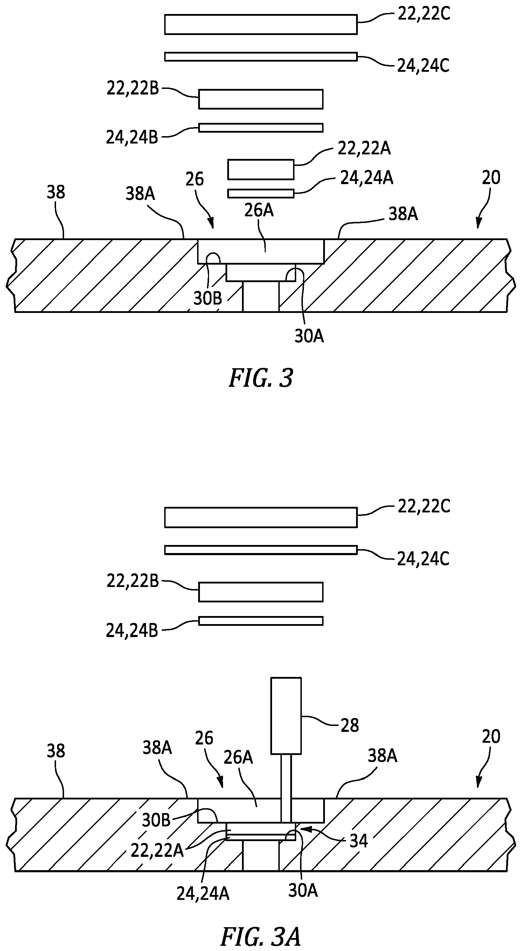

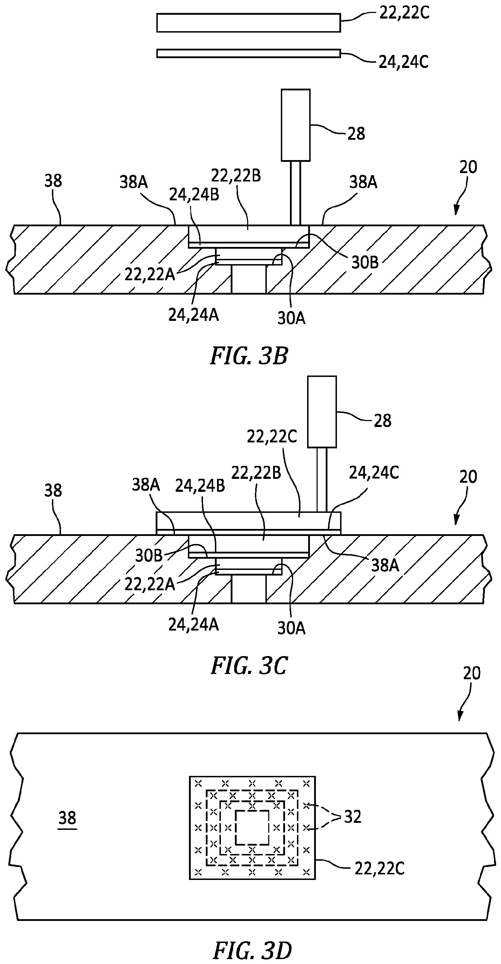

In some embodiments, a repair patch 22 may be geometrically configured to conform with the defect region 26. For example, a repair patch 22 may be configured to fill a hole in a thermoplastic composite component 20. The same repair patch 22 may also extend to peripheral surfaces 38A around the defect region 26 to permit welding of the repair patch 22 to the thermoplastic composite component 20 at the peripheral surfaces 38A (e.g., see FIGS. 3-3C). In some embodiments, a repair patch 22 may be configured to cover a defect region 26 in a thermoplastic composite component 20 (e.g., see FIGS. 2-2B. In those embodiments wherein a repair patch 22 covers a defect region 26, the repair patch 22 may be sized to extend beyond the defect region 26 to surfaces 38A peripheral to the defect region 26 to permit welding of the repair patch 22 to the thermoplastic composite component 20 at those peripheral surfaces 38A.

A repair patch 22 pursuant to the present disclosure may comprise a variety of different material configurations. In some embodiments, a repair patch 22 may comprise a thermoplastic composite material composition that is the same as the thermoplastic composite component 20 being repaired. In some embodiments, a repair patch 22 may comprise a thermoplastic composite material that has a different composition from that of the thermoplastic composite component 20 being repaired; e.g., different polymer matrix, and/or different reinforcing materials, and/or different layer structures. Nonlimiting examples of thermoplastic matrix materials include polyamide (PA), polyamide-imide (PAI), polyarylsulfone (PAS), polyethersulfone (PES), polyoxymethylene (POM), polyphenylene sulphide (PPS), polyether ether ketone (PEEK), polyetherimide (PEI), polyethylene terephthalate (PET), polyphthalamide (PPA), poly ether ketone ketone (PEKK), or poly aryl ether ketone (PAEK), and the like, and combinations thereof. Nonlimiting examples of composite reinforcement materials include glass fibers, carbon fibers, aramid fibers, basalt fibers, mineral fibers, fibers from renewable raw materials, metal fibers or polymer fibers, and the like, and combinations thereof.. The present disclosure is not limited to any particular thermoplastic composite composition or configuration for a repair patch 22.

The thermoplastic interface film 24 comprises a thermoplastic material having a melt temperature that does not substantially exceed the melt temperature of the thermoplastic composite component 20 material. As indicated above, thermoplastic composite materials include a matrix polymer and at least one reinforcing materials. The matrix polymer and the reinforcing materials may have different melt temperatures. Moreover, a reinforcing material within a thermoplastic composite material may influence (e.g., increase or decrease) a melting temperature of a matrix material within the thermoplastic composite material. The term "melt temperature of a thermoplastic composite material" as used herein refers to the temperature at which the thermoplastic composite material begins to enter into a melt state. Preferably, the melt temperature of the thermoplastic interface film 24 is less than the melt temperature of the thermoplastic composite component 20 material and the melt temperature of the thermoplastic composite material of the repair patch 22. The melt temperature of the thermoplastic interface film 24 should be high enough to permit welding of the interface film 24 with the component material and the repair patch 22 material. The thermoplastic interface film 24 material should be compatible with both the component material and the repair patch 22 material. Within these constraints, the thermoplastic interface film 24 is not limited to any particular thermoplastic material. Nonlimiting examples of acceptable thermoplastic interface film 24 materials include at least one of polyamide (PA), polyamide-imide (PAI), polyarylsulfone (PAS), polyethersulfone (PES), polyoxymethylene (POM), polyphenylene sulphide (PPS), polyether ether ketone (PEEK), polyetherimide (PEI), polyethylene terephthalate (PET), polyphthalamide (PPA), poly ether ketone ketone (PEKK), or poly aryl ether ketone (PAEK). The thickness of the thermoplastic interface film 24 may be chosen to ensure the entire film 24 can be heated into a melted state for welding purposes during the repair and to provide sufficient interface material for welding with both the repair patch 22 and the thermoplastic composite component 20.

The present disclosure utilizes a manually traversable (e.g., hand-held) ultrasonic energy source sometimes referred to as an "ultrasonic welder 28". Ultrasonic welders configured for use with most plastics are typically configured to produce ultrasonic sound waves (i.e., excitation waves) in a frequency range of between about 20 kHz to about 1 GHz. The present disclosure may utilize an ultrasonic welder 28 producing excitation waves in the range of about 20-40 kHz. A hand-held ultrasonic welder 28 that produces excitation waves at about 35 kHz has been shown to work well with the present disclosure. The excitation waves from the ultrasonic welder 28 incident to a material (i.e., the thermoplastic interface film 24, the thermoplastic composite component 20, and the thermoplastic composite repair patch 22) cause molecular chains within the material to vibrate and produce thermal energy. Over a brief period of time, the excitation waves from the ultrasonic welder 28 incident to the material will cause the temperature of the incident materials to increase. In the present disclosure, the ultrasonic welder 28 and the excitation waves it produces are configured to elevate the temperature of the interface film 24 to its melt temperature and the component surfaces 30 peripheral to the defect region 26 to a temperature where the interface film 24 will bond with the respective repair patch 22 and the component peripheral surfaces 30, thereby welding the repair patch 22 in place. In most instances, the ultrasonic welder 28 is held in contact with the materials to be welded during the process with some amount of force. As an example, a repair patch 22 and a to be repaired thermoplastic composite component 20 comprising carbon fiber reinforced PAEK composite may be repaired according to the present disclosure using a weld force in the range of about 4 to 15 kilograms and a manual ultrasonic welder frequency of about 35 kHz. The weld strength of such a repair based on ASTM D1002 "single lap shear" standard may be about 32.5 MPa (4,725 psi). The present disclosure manual welding of a repair patch 22 to a thermoplastic composite component 20 may include producing a plurality of spot welds (i.e., individual welds independent of one another that are produced when the ultrasonic welder 28 is maintained in a given position) or may include producing a continuous weld line produced by traversing the ultrasonic welder 28 relative to the thermoplastic composite component 20 during the welding process.

FIGS. 1-2B diagrammatically illustrates an example of a present disclosure repair process for repairing a defect region 26 present in a thermoplastic composite component 20. As stated above, the present disclosure repair method may or may not include a defect region 26 preparation step. In this example, the defect region 26 includes a hole 25 extending through a thermoplastic composite component 20. In this example, the hole 25 in the thermoplastic composite component 20 is initially irregularly shaped. As a first step in this example of the present process, the hole 25 is expanded into a defined shape shown as a square 25A shown in FIGS. 1-2B. The thermoplastic composite component 20 may subsequently be cleaned to remove any contaminants or debris.

In this example, the prepared repair patch 22 comprises the same thermoplastic composite material as the thermoplastic composite panel. The repair patch 22 is configured to be larger than the prepared hole 25A; e.g., the repair patch 22 extends over portions 38A of the exterior surface 38 peripheral to the hole 25A an amount sufficient for an ultrasonic weld to be disposed. In this example, the repair patch 22 may be described as "covering" the defect region 26 / hole 25A

A thermoplastic interface film 24 is prepared having a configuration that will permit the interface film 24 to be disposed at the interface between the thermoplastic composite panel surfaces 38A peripheral to the hole 25A and the repair patch 22. The interface film 24 may be configured to cover all or a portion of the interface region between the thermoplastic composite panel surfaces 38A peripheral to the hole 25A and the repair patch 22. After the repair patch 22 and interface film 24 are positioned relative to the defect region 26 / hole 25A, an ultrasonic welder 28 is operated to produce excitation waves that cause the material subject to the excitation waves (i.e., the thermoplastic interface film 24, the thermoplastic composite component 20, and the thermoplastic composite repair patch 22) to increase in temperature. The ultrasonic welder 28 is operated until the interface film 24 reaches its melt temperature and the respective peripheral panel surfaces 38A and repair patch 22 surfaces reach a temperature where the interface film 24 will bond with the respective surfaces. In most instances, the ultrasonic welder 28 is held in contact with the materials to be welded during the process with some amount of force. Once the welding temperature is reached (which may vary depending on the specific materials), the ultrasonic welder 28 may be removed or shut off and the thermoplastic interface film 24 material will subsequently cool relatively quickly below its melt temperature and thereby solidify causing the repair patch 22 to be welded in place relative to the defect region 26 / hole 25A. FIG. 2B diagrammatically shows a plurality of ultrasonic weld points 32 around the periphery of the hole. FIG. 2B diagrammatically illustrates a plurality of weld points 32 representative of spot welding.

FIGS. 3-3E diagrammatically illustrates a defect region 26 in the form of a hole 26A disposed in the defect region 26 that has been prepared with steps / tiers to permit at least a portion of the hole 26A to be filled with repair patches. FIG. 3 illustrates the hole 26A as yet unfilled with the repair patches 22A, 22B, 22C disposed above the hole 26A. The repair patches 22A and 22B may be described as conforming to at least a portion of the defect region 26. Interface films 24A, 24B, 24C are disposed with each repair patch 22A, 22B, 22C to be joined. FIG. 3A illustrates a first interface film 24A and a first repair patch 22A disposed in contact with a first stepped surface 30A of the hole 26A and an ultrasonic welder 28 welding the first interface film 24A and the first repair patch 22A to the thermoplastic composite panel 20 at the first stepped surface 30A around the periphery of the lowest tier of the hole 26A in the manner described above. FIG. 3B illustrates a second interface film 24B and a second repair patch 22B disposed in contact with a second stepped surface 30B of the hole 26A, and an ultrasonic welder 28 welding the second interface film 24B and the second repair patch 22B to the second stepped surface 30B around the periphery of the second tier of the hole 26A. FIG. 3C illustrates a third interface film 24C and a third repair patch 22C disposed in contact with surface portions 38A of the exterior surface 38 around the periphery of the hole 26A, and an ultrasonic welder 28 welding the third interface film 24C and the third repair patch 22C to the panel 20 at peripheral surfaces 38A. The third repair patch 22C may be described as covering the outermost step / tier of the hole 26A. FIG. 3D is a diagrammatic top view illustrating the ultrasonic weld points 32 around the periphery of the respective hole tiers.

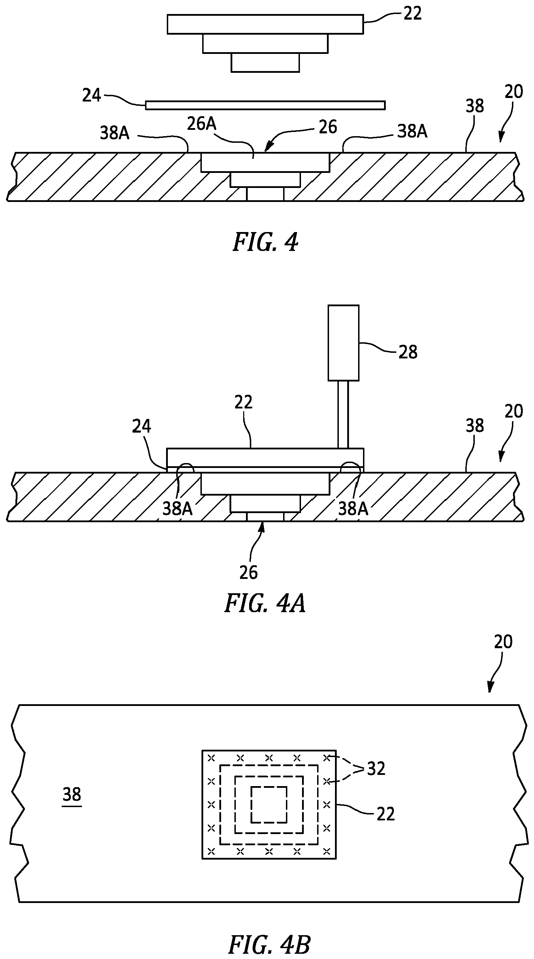

FIGS. 4-4B diagrammatically illustrates a defect region 26 in the form of a hole 26A that has been prepared with steps / tiers to permit at least a portion of the hole 26A to be filled with a single stepped repair patch 22. At least a portion of the single stepped repair patch 22 may be described as conforming to portions of the hole 26A. FIG. 4 illustrates the hole 26A as yet unfilled with the repair patch 22 and an interface film 24 disposed above the hole 26A. FIG. 4B illustrates the interface film 24 and the repair patch 22 disposed in contact with surface portions 38A of the exterior surface 38 around the periphery of the hole 26A, and an ultrasonic welder 28 welding the interface film 24 and the top portion of the repair patch 22 to the panel 20 at the peripheral surface portions 38A in the manner described above. FIG. 4C is a diagrammatic top view illustrating the ultrasonic weld points 32 around the periphery of the stepped hole.

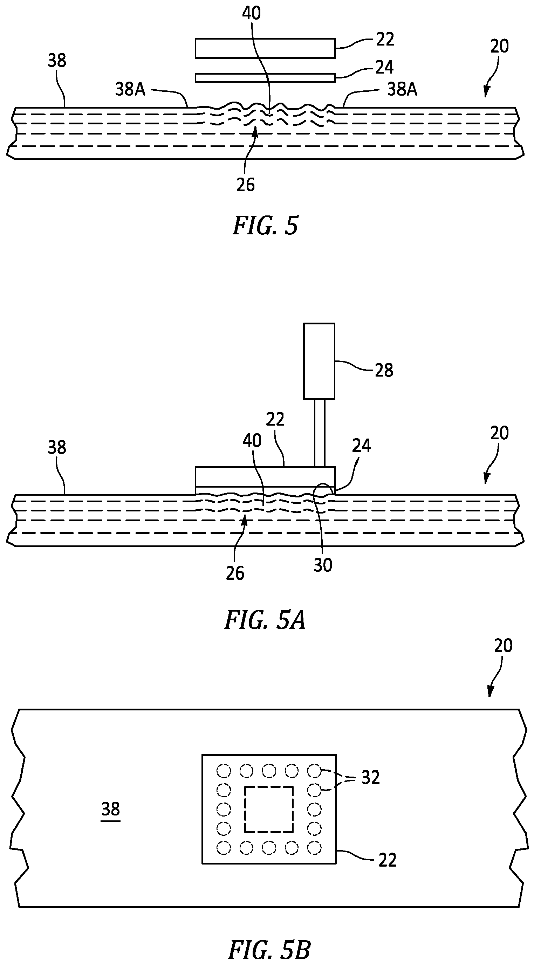

FIG. 5 diagrammatically illustrates a thermoplastic composite panel 20 with a defect region 26 having delaminations 40 inside the thermoplastic composite panel 20 with a repair patch 22 and an interface film 24 disposed above the delaminated region. FIG. 5A illustrates the interface film 24 and the repair patch 22 disposed in contact with an exterior surface 38 of the thermoplastic composite panel 20. The repair patch 22 and the interface film 24 are sized to extend beyond the defect region 26 and to cover surface portions 38A of the exterior surface 38 around the periphery of the defect region 26 including the delaminations 40. An ultrasonic welder 28 is shown welding the interface film 24 and the repair patch 22 to the panel 20 at the surface portions 38A peripheral to the defect region 26 in the manner described above. FIG. 5B is a diagrammatic top view illustrating the ultrasonic weld points 32 around the periphery of the defect region 26.

The present disclosure process examples provided above utilize planar thermoplastic composite repair patches 22. The present disclosure is not limited to any particular repair patch 22 configuration. The present disclosure's use of a hand-held ultrasonic welder 28 facilitates repair thermoplastic composite components 20 having nonplanar, and sometime three-dimensional configurations that a system with a positionally traversable ultrasonic welder will either struggle with or cannot handle.

In some instances, no further processing is required after the welding and the thermoplastic composite component 20 is repaired. In some instances, it may be desirable to include one or more post-welding process steps (e.g., smoothing, deburring, cleaning, or the like) to complete the repair.

In this manner, the present disclosure provides a repair process than can be used in the field or virtually anywhere to repair a defect region 26 in a thermoplastic composite component 20 in a very limited amount of time. A repair according to the present disclosure may be used as a temporary repair or as a permanent repair.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A method for repairing a thermoplastic composite component (20), comprising:
preparing at least one repair patch (22) configured to conform with a defect region (26) of the thermoplastic composite component (20), the defect region (26) having a periphery that defines the defect region (26), the at least one repair patch (22) comprising a thermoplastic composite material;
providing a thermoplastic interface film (24) configured to conform with at least a part of the at least one repair patch (22), the thermoplastic interface film (24) having a melt temperature;
disposing the thermoplastic interface film (24) between a surface (30) of the thermoplastic composite component (20) disposed at the periphery of the defect region (26) and the at least one repair patch (22); and
heating the thermoplastic interface film (24) to its melt temperature using an ultrasonic welder (28), and subsequently allowing the thermoplastic interface film (24) to cool, thereby welding the at least one repair patch (22) to the thermoplastic composite component (20).

2. The method of claim 1, wherein the heating is a manual process.

3. The method of claim 2, wherein the step of heating the thermoplastic interface film (24) to its melt temperature using the ultrasonic welder (28) includes applying a force to an area of the repair patch (22) to be welded thereby holding the repair patch (22) against the thermoplastic interface film (24), optionally wherein the method includes maintaining the force while the thermoplastic interface film (24) is allowed to cool below the melt temperature of the thermoplastic interface film (24).

4. The method of claim 2 or 3, wherein the heating includes manually manipulating the ultrasonic welder (28) relative to the periphery of the defect region (26), optionally wherein the manual manipulation includes:
producing a plurality of spot welds; or
traversing the ultrasonic welder (28) to produce a continuous weld line.

5. The method of any preceding claim, wherein the at least one repair patch (22) is a plurality of repair patches (22A, 22B, 22C) that collectively conform with the defect region (26) of the thermoplastic composite component (20).

6. The method of any preceding claim, wherein the thermoplastic composite component (20) and the at least one repair patch (22) comprise the same material.

7. The method of any of claims 1 to 5, wherein the thermoplastic composite component (20) comprises a first thermoplastic composite material and the at least one repair patch (22) comprises a second thermoplastic composite material different from the first thermoplastic composite material.

8. The method of any preceding claim, wherein the thermoplastic interface film (24) melt temperature is:
equal to or less than a melt temperature of the thermoplastic composite component (20); and/or
equal to or less than a melt temperature of the at least one repair patch (22).

9. The method of any preceding claim, wherein the defect region (26) includes a hole (25) and the method includes modifying the hole (25) to a predetermined geometry, and the repair patch (22) is prepared to conform with the predetermined geometry.

10. The method of any preceding claim, wherein the thermoplastic composite component (20) comprises at least one of glass fibers, carbon fibers, aramid fibers, basalt fibers, mineral fibers, fibers from renewable raw materials, metal fibers or polymer fibers.

11. The method of any preceding claim, wherein the thermoplastic composite comprises a thermoplastic material comprising at least one of polyamide (PA), polyamide-imide (PAI), polyarylsulfone (PAS), polyethersulfone (PES), polyoxymethylene (POM), polyphenylene sulphide (PPS), polyether ether ketone (PEEK), polyetherimide (PEI), polyethylene terephthalate (PET), polyphthalamide (PPA), poly ether ketone ketone (PEKK), or poly aryl ether ketone (PAEK).

12. The method of any preceding claim, wherein the at least one repair patch (22) comprises a thermoplastic material comprising at least one of polyamide (PA), polyamide-imide (PAI), polyarylsulfone (PAS), polyethersulfone (PES), polyoxymethylene (POM), polyphenylene sulphide (PPS), polyether ether ketone (PEEK), polyetherimide (PEI), polyethylene terephthalate (PET), polyphthalamide (PPA), poly ether ketone ketone (PEKK), or poly aryl ether ketone (PAEK).

13. The method of any preceding claim, wherein the thermoplastic interface film (24) comprises a thermoplastic material that comprises at least one of a polyamide (PA), polyamide-imide (PAI), polyarylsulfone (PAS), polyethersulfone (PES), polyoxymethylene (POM), polyphenylene sulphide (PPS), polyether ether ketone (PEEK), polyetherimide (PEI), polyethylene terephthalate (PET), polyphthalamide (PPA), poly ether ketone ketone (PEKK), or poly aryl ether ketone (PAEK).

14. A method for repairing a thermoplastic composite component (20), comprising:
providing a repair patch (22) configured to cover a defect region (26) of a thermoplastic composite component (20) and at least a portion of a surface of the thermoplastic composite component (20) peripheral to the defect region (26), the at least one repair patch (22) comprising a thermoplastic composite material;
providing a thermoplastic interface film (24) configured to conform with at least a part of the repair patch (22), the thermoplastic interface film (24) having a melt temperature;
disposing the thermoplastic interface film (24) between the surface of the thermoplastic composite component (20) peripheral to the defect region (26) and the repair patch (22); and
heating the thermoplastic interface film (24) to its melt temperature using an ultrasonic welder (28), and subsequently holding the welded area until the thermoplastic interface film (24) cools below its melt temperature.

15. The method of claim 14, wherein the step of heating the thermoplastic interface film (24) to its melt temperature using the ultrasonic welder (28) includes applying a force to an area of the repair patch (22) to be welded thereby holding the repair patch (22) against the thermoplastic interface film (24), and the force is maintained while the welded area is held until the thermoplastic interface film (24) is cooled below its the melt temperature, optionally wherein the heating includes manually manipulating the ultrasonic welder (28) relative to the surface portion of the thermoplastic composite component (20) peripheral to the defect region (26).
